# EUROPEAN PATENT APPLICATION

(11) **EP 4 386 800 A1**
(43) Date of publication of application: **19.06.2024**
(21) Application number: 22212958.7
(22) Date of filing: 12.12.2022
(51) Int. Cl.: H01H 9/54, H02H 3/087

(54) **HIGH-SPEED CIRCUIT BREAKER DEVICE, POWER SUPPLY SYSTEM AND METHOD**

(71) Applicant: Microelettrica Scientifica S.p.A., 20090 Buccinasco (Milano) (IT)
(72) Inventor: REDAELLI, Moreno, 23847 Molteno (LC) (IT)
(74) Representative: Prüfer & Partner mbB Patentanwälte · Rechtsanwälte

(57) **Abstract**

The present invention relates to a high-speed circuit breaker device (1) for breaking an electrical circuit of a railway vehicle (100) or railway vehicle environment supplied by a DC current, comprising:
at least one first circuit breaker (10, 20) configured to interrupt a primary power supply line (40), wherein
the high-speed circuit breaker device (1) further comprises at least one secondary circuit breaker (30) connected in parallel to the at least one primary circuit breaker (10, 20) by a secondary power supply line (41), and wherein
the at least one secondary circuit breaker (30) is configured to break the secondary power supply line (41) upon a voltage applied to the at least one second circuit breaker (30) below a predetermined activation threshold of the second circuit breaker (30) and to allow a current flow along the secondary power supply line (41) upon the voltage reaching or exceeding the predetermined activation threshold of the second circuit breaker (30).

The present invention further relates to a power supply comprising such circuit breaker device, a respective method, and a respective railway vehicle.

## Description

The present invention relates to a high-speed circuit breaker for interrupting an electrical circuit of a railway vehicle or railway vehicle environment supplied by a DC current, a power supply system comprising such high-speed circuit breaker, a method for controlling such high-speed circuit breaker and/or power supply system, and a railway vehicle comprising such high-speed circuit breaker and/or power supply system.

A high-speed circuit breaker is used to interrupt an electrical circuit in power supply systems. With respect to railway vehicles, such high-speed circuit breaker may be installed on the electrical circuit downstream of a DC pantograph to supply a propulsion motor, other auxiliary circuits or any consumer unit in general with current from a power source. Under normal conditions, a high-speed circuit breaker is configured to carry all power required by connected consumer units. However, upon a current exceeding a predetermined threshold, another fault indicator indicating a fault condition is detected, or a normal opening command, the high-speed circuit breaker has to interrupt the electrical circuit as soon as possible. A respective high-speed circuit breaker may be an electromechanical circuit breaker controlled to spatially separate contacts in a fault condition like an overcurrent. By distancing the contacts, electric arcs are formed between the contacts. The arcs are deflected and extinguished in an arc chute by an electromagnetic field provided by the electromechanical circuit breaker. Thereby, the high-speed circuit breaker is designed in order to efficiently break short circuit current in the fastest way possible in order to protect all elements of the electrical system. It may happen that, for system requirements, the high-speed circuit breaker is also controlled to open under any type of current. Accordingly, the working conditions may vary over a comparably wide range, and an optimization required at very high currents differs from an optimization required at very low currents. Since the electromagnetic field and respective electromagnetic forces may be self-induced, the ability to sufficiently extinguish arcs in the chute, in particular within a predetermined period of time, decreases with decreasing current. Accordingly, the electromechanical circuit breaker may become ineffective in the event of comparably low currents. This particularly applies for DC applications. Once a breaking operation is successfully done, the current in the circuit is zero, and the spatially separated contact ensure the proper insulation between upstream and downstream circuit.

Therefore, it is an object of the present invention to provide a high-speed circuit breaker device, a respective power supply system and a method for controlling the high-speed circuit breaker device or power supply system, respectively, capable of more effectively interrupting electrical circuits.

The object is solved by the subject-matter of the independent claims. Further aspects of the present invention are subject to the dependent claims.

According to the present invention, a high-speed circuit breaker device for interrupting an electrical circuit of a railway vehicle or railway vehicle environment supplied by a DC current comprises at least one first circuit breaker configured to interrupt a primary power supply line. The high-speed circuit breaker device further comprises at least one secondary circuit breaker connected in parallel to the at least one primary circuit breaker by a secondary power supply line. The at least one secondary circuit breaker is configured to interrupt the secondary power supply line upon a voltage applied to the at least one second circuit breaker below a predetermined activation threshold of the second circuit breaker and to allow a current flow along the secondary power supply line upon the voltage reaching or exceeding the predetermined activation threshold of the second circuit breaker.

The at least one first circuit breaker may, for example, be understood as a circuit breaker for interrupting the electrical circuit by interrupting the primary power supply line under predetermined conditions, such as rated current, overcurrent or short circuit. The at least one first circuit breaker may be configured to interrupt the primary power supply line based on an external or intrinsic opening command, e.g. an external opening command by a monitoring device or control device in response to an overcurrent. However, since the at least one first circuit breaker may fail to interrupt the electrical circuit within sufficient time, specifically efficiently interrupting the electrical circuit within sufficient time under low current, to provide the functionality of a high-speed circuit breaker or to interrupt the electrical circuit at all, the at least one secondary circuit breaker is provided. Since the at least secondary circuit breaker is connected in parallel to the at least one first circuit breaker by the secondary power supply line, the at least one secondary circuit breaker is configured to short circuit the at least one first circuit breaker upon allowing a current to flow over the secondary power supply line. Allowing the current to flow over the secondary power supply line depends on the predetermined activation threshold of the at least one second circuit breaker as a voltage threshold for a voltage to be applied to the at least one second circuit breaker, below which the at least one second circuit breaker is open so that there is no current flow over the secondary power supply line. The predetermined activation threshold or voltage threshold, respectively, is preferably the minimum voltage required to power up the second circuit breaker. Accordingly, the second circuit breaker may be configured to be sufficiently powered to operate at the predetermined activation threshold. Alternatively, the predetermined activation threshold or voltage threshold, respectively, may be a predetermined minimum voltage representing an intended operation of the second circuit breaker. Here, the activation of the second circuit breaker may be set different for different applications and/or operating modes.

In some embodiments, the high-speed circuit breaker device is configured to provide the voltage to be applied to the at least one second circuit breaker upon interrupting the primary power supply line under DC current by the at least one first circuit breaker, when the DC current is below a predetermined tripping threshold of the at least one second circuit breaker, preferably below 100 A, more preferably below 50 A.

For example, the at least one first circuit breaker is intended to interrupt the primary power supply line under DC current reaching or exceeding the predetermined tripping threshold or current threshold, respectively, of the at least one second circuit breaker, specifically within sufficient time as required by a high-speed circuit breaker. In turn, it may be assumed that the at least one first circuit breaker is not working effectively below the predetermined tripping threshold of the at least one second circuit breaker, so that it may be required to activate the at least one second circuit breaker by applying the voltage at or above the activation threshold. The DC current being below the predetermined tripping threshold or any other indicator representative of the DC current being or tending to be below the predetermined tripping threshold may be detected by respectively suitable detection means, such as current sensors or other detection means detecting a value or condition representative of the DC current being or tending to be below the predetermined tripping threshold, to control the at least one second circuit breaker accordingly. Such detection means may only be activated to monitor the DC current with respect to the predetermined tripping threshold upon the at least one first circuit breaker being controlled to interrupt the primary power supply line. Alternatively, the monitoring may be executed continuously. Alternatively or in addition, the DC current being below the predetermined tripping threshold may be detected in terms of an intrinsic condition of the high-speed circuit breaker device, which will be described later.

As per the above, the combination of the at least one first circuit breaker and the at least one second circuit breaker allows the high-speed circuit breaker device to sufficiently interrupt the electric circuit under high current conditions by the at least one first circuit breaker. Under low current conditions, e.g. below 100 A or 50 A, the high-speed circuit breaker device is still capable of reducing the current in sufficient time, i.e. efficiently breaking, by closing the second circuit breaker. In other words, the at least one first circuit breaker is preferably configured to efficiently break a current or DC current, respectively, from the predetermined tripping threshold to a short circuit current, while the at least one second circuit breaker is preferably designed to efficiently break a current or DC current, respectively, from zero to the predetermined tripping threshold. Thus, the high-speed circuit breaker device may allow the effectively break a current or DC current, respectively, from zero to the short circuit current.

Preferably, the tripping threshold corresponds to a DC current insufficient to lower the DC current within a predetermined period of time by the interrupting action of the at least one first circuit breaker.

The predetermined period of time may be the maximum time the at least one first circuit breaker is configured to lower the current or break the current for the high-speed circuit breaker device under normal operation. For example, the at least one first circuit breaker may be an electromechanical circuit breaker as further addressed with respect to an embodiment of the at least one first circuit breaker. Such electromechanical circuit breaker may comprise contacts to be mechanically opened, which occurs in the presence of voltage, according to which an electric arc is generated. The electromechanical circuit breaker may be configured to push the arc by a self-generated electromagnetic force in an extinguishing cell, e.g. with metal or ceramic fins as arc chute. The arc time, i.e. the time between the generation of the arc and the arc being extinguished, depends on at least one of the voltage V, current I, resistance R and inductance L. If the current becomes or falls below a certain current threshold, it is assumed that the arc time increases such that the current interruption by the at least one first circuit breaker becomes particularly ineffective due to the low self-induced magnetic field insufficient to create an effective magnetic force to efficiently break. Accordingly, such certain current threshold may then be defined as tripping threshold for the at least one second circuit breaker. Due to the at least one second circuit breaker short circuits the at least one first circuit breaker, the arc in the arc chute of the electromechanical circuit breaker as the at least one first circuit breaker is extinguished by a commutation phenomenon to the parallel branch.

In some embodiments, the at least one first circuit breaker is connected to the at least one second circuit breaker to provide the at least one second circuit breaker with the voltage to be applied to the at least one second circuit breaker upon interrupting the primary power supply line under DC current.

Accordingly, the at least one second circuit breaker is at least supplied by the at least one first circuit breaker with the arc voltage as the voltage, which may allow the at least one second circuit breaker to flow the current over the secondary power supply line to short circuit the at least one first circuit breaker. For example, due to the at least one first circuit breaker being controlled to interrupt the primary power supply line and a respective arc formation with respect to an electromechanical circuit breaker as at least one first circuit breaker, the at least one second circuit breaker can be powered directly by the arc voltage across the at least one first circuit breaker. The arc voltage reaching or exceeding the activation threshold, e.g. 100 Vdc, may therefore control the at least one second circuit breaker to allow a current to flow. In such embodiment, the at least one second circuit breaker can be controlled by the arc voltage of the at least one first circuit breaker.

In some embodiments, the high-speed circuit breaker device further comprises a control device configured to control the at least one second circuit breaker to allow a current flow only after the activation threshold of the second circuit breaker has been reached or exceeded over a predetermined activation time, preferably at least 50 ms, more preferably at least 100 ms, and/or upon determination of the DC current upon interrupting by the at least one first circuit breaker falling below the tripping threshold.

Since the at least one second circuit breaker may only be intended to short circuit the at least one first circuit breaker, if the at least one first circuit breaker is ineffective to interrupt the primary power supply line in sufficient time, the control device may be configured to control the at least one second circuit breaker to be provided with the voltage suitable of allowing a current to flow over the secondary power supply line upon the at least one first circuit breaker being assumed as working ineffective. Alternatively, the voltage suitable of allowing a current to flow over the secondary power supply line is already applied to the at least one second circuit breaker, but the at least one second circuit breaker is controlled to stay open until elapse of the predetermined activation time. Accordingly, the general allowance of the current flow via the secondary power supply line is dependent on the predetermined activation threshold, while the concrete closing to actually start such current flow is dependent on the predetermined activation threshold still applying after the elapse of the predetermined activation time. In other words, the concrete current flow via the secondary power supply line is dependent on the requirements with respect to the predetermined activation threshold and the predetermined activation time.

As previously addressed, the at least one first circuit breaker may be assumed as ineffective, such as due to low current ineffective to extinguish the arc upon opening of the contacts of the electromechanical circuit breaker as first circuit breaker, if the arc voltage does not fall below a predetermined arc voltage threshold within a predetermined period of time. However, the assumption of the at least one first circuit breaker being ineffective may not only be indicated by the arc voltage being equal to or above the activation threshold for just a single moment but over a predetermined time as an example of the predetermined activation time, which allows the at least one first circuit breaker to lower the voltage below the activation threshold of the at least one second circuit breaker. In other words, the arc voltage not falling below the activation threshold after the predetermined activation time has elapsed, may be assumed as indicator for a low current causing the at least one first circuit breaker to work ineffectively.

Accordingly, if the arc voltage in the example above is applied to the at least one second circuit breaker to allow the current to flow over the secondary power supply line, such current flow is controlled by the control device not to start before the activation threshold has been reached or exceeded over the predetermined activation time. As previously said, the at least one first circuit breaker may be not assumed as ineffective solely upon an occurrence of the arc voltage reaching or exceeding the activation threshold, but when the activation threshold is reached or exceeded over the predetermined activation time. Therefore, the control device may be configured to keep the at least one second circuit breaker in the state of interrupting the secondary power supply line until the activation time has elapsed. If the arc voltage is still equal or above the activation threshold after the activation time has elapsed, which is indicative of the at least one first circuit breaker being ineffective, the at least one second circuit breaker is commanded to allow the current to flow over the secondary power supply circuit. The control device may therefore be comprised by the at least one second circuit breaker as electronics to be turned on at a time t0, if the arc voltage reaches or exceeds the activation threshold, and starts counting, for example, 100 ms until t1 as predetermined activation time. However, a respective control device may also be provided by the high-speed circuit breaker and being operatively connected to the at least one second circuit breaker to provide the described functionality. In another variant, the control device may be comprised by a power supply system comprising the high-speed circuit breaker and the at least one second circuit breaker, respectively, as described later.

With the at least one second circuit breaker being connected to the at least one first circuit breaker to be applied with the arc voltage under further consideration of the predetermined activation time to be elapsed before closing of the at least one second circuit breaker, the high-speed circuit breaker device provides intrinsic operating modes for high current conditions and low current conditions. In other words, high current conditions are operated by the at least one first circuit breaker, while low current conditions are supported by the at least one second circuit breaker. In such configuration, the at least one circuit breaker is operated with respect to a voltage and time criterion. Accordingly, the operating range of the high-speed circuit breaker device is allowed to be enhanced.

Even though the above functionality is described with respect to the control device controlling the at least one second circuit breaker in dependence of the arc voltage applied over a predetermined activation time, the described functionality may also apply for any other voltage or indicator representative of the at least one first circuit breaker being ineffective and suitable to control the at least one second circuit breaker to interrupt the secondary power supply line or to allow respective current flow. For example, such indicator may be provided by detection means or the like representative of the at least one first circuit breaker being ineffective. The control device may therefore also be configured to distinguish between different indicator inputs, to which different predetermined activation times and/or activation thresholds may be assigned. For example, the control device may receive the arc voltage by the first circuit breaker and a current signal from the primary power supply line. If the current signal represents a critical current with the risk to cause damages before the end of the activation time assigned to the arc voltage, the control device may immediately command the at least one second circuit breaker to allow the current flow over the secondary power supply line. Further, the activation time and/or activation thresholds may be set in dependence of operating modes and/or may be selectively adapted with respect to different risk scenarios.

Alternatively or in addition, the control device configured to control the at least one second circuit breaker to allow a current flow upon determination of the DC current upon interrupting by the at least one first circuit breaker falling below the tripping threshold of the at least one second circuit breaker. Accordingly, the at least one first circuit breaker to be assumed as ineffective may be representative by a low current, i.e. the current being below the tripping threshold, such as 50 A. However, this may require additional detection means but may allow shorter reaction times.

In some embodiments, the control device as described previously or another control device comprised by the high-speed circuit breaker device is configured to control the at least one second circuit breaker to interrupt the secondary power supply line after a current flow via the at least one second circuit breaker over a predetermined current flow time, preferably no longer than 10 ms of current flow, more preferably, no longer than 5 ms of current flow.

The predetermined current flow time may correspond to an estimated time sufficient to interrupt the primary power supply line but short circuiting the at least one first circuit breaker by the at least one second circuit breaker. However, the predetermined current flow time may be calculated on monitored values of the electrical circuit, e.g. the arc voltage upon opening the contacts of the at least one first circuit breaker or the like. Accordingly, the predetermined current flow time may be adaptable in dependence of actual operating conditions and/or operating modes. The predetermined current flow time may be set according to the commutation time from the at least one first circuit breaker to the at least one second circuit breaker.

In some embodiments, the at least one second circuit breaker comprises at least one IGBT, preferably two IGBTs, each of which is configured and arranged to allow a current flow in a different direction according to a DC current direction applied.

The respective gate of the IGBT may receive an intrinsic or external command, e.g. from an electronic board as control device, to close, i.e. to start the conductivity phase, to allow a current to flow over the secondary power supply line. However, DC applications require the at least one IGBT to be arranged in the direction of the current flow. If different DC applications may provide a DC current flow in opposite directions or to avoid any failures by wrong assembly of the electrical components, the use of at least two IGBTs arranged for the different current flow directions may be advantageous. The at least two IGBTs may be connected in parallel. Specifically, the at least two IGTBs in the parallel arrangement are controlled simultaneously, preferably by the same control device or electronics, to interrupt and allow a current flow at the same time, independent of the concrete direction of the current flow.

In some embodiments, the at least one first circuit breaker is an electromechanical circuit breaker, comprising at least one movable contact and at least one fixed contact and at least one actuator configured to move at least one movable contact towards and away from the at least one fixed contact.

According to the at least one first circuit breaker as electromechanical breaker, the at least one first circuit breaker may allow to sufficiently act as high-speed circuit breaker for relatively high currents, e.g. above 50 A. Even though the efficiency decreases with a decrease in current up to an inefficiency, particularly in view of high-speed circuit breakers, the at least one second circuit breaker may compensate such deficiency even in low current applications or low current operation.

Further, as the electromechanical circuit breaker provides an arc and arc voltage, respectively, the arc voltage may be advantageously used as voltage to be applied to the at least one second circuit breaker. If the arc voltage is at or above the activation threshold, the arc voltage may allow the current flow along the secondary power supply line. Further, the arc voltage may indicate a low current with the arc voltage not falling below the activation threshold after elapse of the activation time as input to cause the at least one second circuit breaker to allow a current to flow over the secondary power supply line. Accordingly, in such configuration, the electromechanical switch may serve as voltage source for the at least one second circuit breaker as well as signal source for a respective control thereof.

Besides the at least one movable contact of the electromechanical circuit breaker to be moved towards and away from the fixed contact, the electromechanical circuit breaker may comprise an arc chute to extinguish an arc generated by opening of the contacts. The arc chute may comprise metallic and/or ceramic fins.

In some embodiments, the high-speed circuit breaker device comprises at least two first circuit breakers connected in series along the primary power supply line.

Due to the at least two first circuit breakers connected in series along the power supply line the high speed circuit breaker device may provide redundancy in the event of a failure of one of the at least two first circuit breakers. Furthermore, according to a control and configuration of the at least two first circuit breakers, the interrupting characteristics may be influenced. The at least one second circuit breaker may be connected in parallel to one of the at least two first circuit breakers but may also be connected in parallel to more than one or all of the at least two first circuit breakers. With respect to insulation, at least one first circuit breaker of the at least two circuit breakers providing insulation properties may be arranged upstream of the parallel circuit of the at least one second circuit breaker with respect to a direction from at least one consumer unit or load, respectively, to a DC power supply unit connected by the primary power supply line as upstream direction. However, insulation properties may also be provided by other components provided upstream of the parallel circuit.

Preferably, the high-speed circuit breaker device comprises a switching mechanism configured to actuate the at least two first circuit breakers to interrupt the primary power supply line simultaneously, preferably synchronously.

The switching mechanism may be a mechanical switching mechanism to actuate the at least two first circuit breakers to interrupt the primary power supply line at the same time to decrease the time required to cut off current by generation of arcs by each of the at least two first circuit breakers instead of only by one of the at least two first circuit breakers. Consequently the term "simultaneously" refers to the actuation of the at least two first circuit breakers to interrupt the primary power supply line at the same time or substantially at the same time in view of slight differences due to tolerances. However, the switching mechanism may also allow to synchronously actuate the at least two first circuit breakers, wherein the term "synchronously" refers to a simultaneous activation by the same amount. For example, the switching mechanism may actuate a moving contact of each of the at least two first circuit breakers as electromechanical circuit breakers as previously described at the same time and by the same moving distance to achieve the same distance between the respective moving and fixed contacts for similar arc generation as synchronous activation.

The double breaking option by the switching mechanism allows a fast opening concept in accordance with the doubled velocity in introducing arc voltage. This allows to increase efficiency at breaking for both, high and low currents as per the double breaking. Due to the accelerated interruption of the primary power supply line, low current solutions, such as IGBT low current solutions, are feasible. Accordingly, the double-breaking first circuit breaker devices, which may be considered as double breaking device, allow to increase efficiency over the current operating range.

Further, the at least one second circuit breaker may be connected in parallel to at least one of the at least two first circuit breakers, while at least one of the at least two circuit breakers is arranged upstream of such parallel circuit as non-paralleled first circuit breaker. The non-paralleled primary open contact may thereby be configured to ensure the insulation from upstream and downstream due to physical contact separation. The at least one first circuit breaker may have at least two breaking points in order to ensure insulation. The at least one second circuit breaker may not be able to ensure proper insulation due to missing physical contact separation.

Further, by allowing the arc extinction to be performed by at least two first circuit breakers, a more horizontal design becomes possible, which allows a more compact design in a vertical direction with respect to railway vehicle applications. For example, the switching mechanism, such as a rotating switching mechanism as addressed below, is arranged in a floor plane or substantially horizontal plane in an installed condition, respectively, while the arc chutes evolving substantially perpendicular or vertical, respectively, thereto.

Preferably, the switching mechanism is a rotating switching mechanism to actuate the at least two first circuit breakers as electromechanical circuit breakers as described previously by comprising the respective movable contacts, each of which extending radially outward from a rotatable actuator with respect to the rotational axis of the rotatable actuator.

For example, the high-speed circuit breaker device comprises two first circuit breakers configured as electromechanical circuit breakers, each of which comprises at least one fixed contact. The fixed contacts or the respective contact members thereof, respectively, may be substantially arranged in the same plane or at least in planes substantially in parallel to each other. In such configuration, the rotating switching mechanism may be arranged between the fixed contacts with respectively opposed two moving contacts extending radially outward from the rotatable actuator such that the contact members of each of the two moving contacts contacting the respective fixed contacts in a closing position of the rotating switching mechanism. Further, the rotating switching mechanism may be configured such that a rotation of the rotatable actuator about a rotational axis causes the two moving contacts to move away from the respective fixed contacts by the same angle at the same time to open the contacts.

The rotating working principle allows a reduced actuating movement and low mechanical friction. This allows an enhanced durability and a reduced closing power required. Further, the rotating switching mechanism allows shorter actuation travel compared to the main contact opening distance.

In another aspect, the present invention relates to a power supply system for a railway vehicle (100) or railway vehicle environment, comprising at least one DC power supply unit, at least one consumer unit operatively connected to the at least one DC power supply unit by a primary power supply line, and at least one high-speed circuit breaker device as described previously disposed on the primary power supply line between the at least one DC power supply unit and the at least one consumer unit.

Due to the high-speed circuit breaker device disposed on the primary power supply line between the DC power supply unit and the at least one consumer unit, the at least one consumer unit may be protected against any over current or other intolerable electrical impact from the DC power supply unit and vice versa. The advantages previously described with respect to the high-speed circuit breaker device apply analogously to the power supply system.

In another aspect, the present invention relates to a method for controlling a high-speed circuit breaker device as described previously and/or a power supply system as described previously, comprising the steps of:
detecting a trigger event or receiving an external command to interrupt the primary power supply line,
interrupting the primary power supply line by the at least one first circuit breaker,
applying a voltage to the at least one second circuit breaker, and
allowing a current flow over the secondary power supply line by the second circuit breaker upon the applied voltage reaching or exceeding the predetermined activation threshold of the second circuit breaker.

In alignment with the previous description of the high-speed circuit breaker device and therefore the power supply system comprising the same, the method allows interrupting the primary power supply line to protect components connected thereto against any undesired electrical impact based on a DC current or for any other reason. The intent to interrupt the primary power supply line may be based on a monitored value exceeding a predetermined threshold, e.g. a measured DC current representative of an overcurrent, another external signal or an intrinsic effect. Accordingly, the detection of a trigger event or receiving an external command for interrupting the primary power supply line by the at least one first circuit breaker is not limited to a detection by external devices to control the at least one first circuit breaker accordingly, but may also comprise an intrinsic effect within the at least one first circuit breaker resulting in an interrupting action by the at least one first circuit breaker.

Upon interruption of the at least one first circuit breaker, a voltage is applied to the at least one second circuit breaker. The voltage may be a voltage across the at least one first circuit breaker in response to the interrupting action or a voltage corresponding thereto provided by another voltage source or a voltage corresponding to another electrical parameter indicative of the effect of the interrupting action of the at least one first circuit breaker.

If the applied voltage reaches or exceeds the predetermined activation threshold of the at least one second circuit breaker, the at least one second circuit breaker is allowed to short circuit the at least one first circuit breaker. However, short circuiting of the at least one first circuit breaker by the at least one second circuit breaker may depend on more factors than the applied voltage reaching or exceeding the predetermined activation threshold of the second circuit breaker.

In some embodiments, the voltage is applied to the at least one second circuit breaker upon the voltage reaching or exceeding the predetermined activation threshold of the second circuit breaker over a predetermined activation time, preferably at least 50 ms, more preferably at least 100 ms, and/or upon determination of the DC current upon interrupting by the at least one first circuit breaker falling below the tripping threshold.

In such embodiment, the short circuiting of the at least one first circuit breaker may be directly possible by applying the voltage reaching or exceeding the predetermined activation threshold of the second circuit breaker. However, the voltage is not applied until the voltage has reached or exceeded the predetermined activation threshold of the second circuit breaker over the predetermined activation time. Alternatively or in addition, a direct short circuiting may be executed upon a determination of another indicator representative of the at least one first circuit breaker expected to be ineffective, such as the DC current upon interrupting by the at least one first circuit breaker falling below the tripping threshold.

Alternatively, allowing a current flow over the secondary power supply line by the second circuit breaker upon the applied voltage reaching or exceeding the predetermined activation threshold of the second circuit breaker is performed upon the voltage reaching or exceeding the predetermined activation threshold of the second circuit breaker lasts for at least a predetermined activation time, preferably at least 50 ms, more preferably at least 100 ms. Alternatively or in addition, a current flow over the secondary power supply line by the second circuit breaker upon the applied voltage reaching or exceeding the predetermined activation threshold of the second circuit breaker is performed upon determination of the DC current upon interrupting by the at least one first circuit breaker falling below the tripping threshold.

Accordingly, the voltage may be applied to the at least one second circuit breaker directly when interrupting the primary power supply line by the at least one first circuit breaker. However, even though the at least one second circuit breaker may be in principle able to allow a current flow upon the applied voltage reaching or exceeding the predetermined activation threshold of the second circuit breaker, the concrete implementation of the current flow is withhold until the activation time has elapsed and the applied voltage still reaches or exceeds the predetermined activation threshold. Here, the determination of the DC current falling below the tripping threshold upon interrupting by the at least one first circuit breaker may be considered as an alternative or additional criterion to initiate the short circuiting of the at least one first circuit breaker by the at least one second circuit breaker.

In another aspect, the present invention relates to a railway vehicle comprising a high-speed circuit breaker device as described previously and/or a power supply system as described previously and/or being configured to execute the method as described previously.

The principles and advantageous effects described with respect to the high-speed circuit breaker device, the power supply system and/or the respective method also apply to the railway vehicle.

Further advantages, aspects and details of the invention are subject to the claims, the following description of exemplary embodiments applying the principles of the invention, and the respective exemplary drawings.
**Figure 1** is a schematic view of a high-speed circuit breaker device according to an exemplary embodiment of the present invention;
**Figure 2** is a schematic view of the high-speed circuit breaker device according to Fig. 1 further showing a switching mechanism for two first circuit breakers according to an exemplary embodiment of the present invention;
**Figure 3** is a schematic view of a railway vehicle according to an exemplary embodiment of the present invention;
**Figure 4** is a flow chart of a method for controlling a high-speed circuit breaker device and/or a power supply system according to an exemplary embodiment of the present invention;
**Figure 5** is a diagram to illustrate high current and low current conditions;
**Figure 6** is a diagram to illustrate an arc voltage evolution under high current conditions with respect to a first circuit breaker operation; and
**Figure 7** is a diagram to illustrate an arc voltage evolution under low current conditions with respect to a first circuit breaker and second circuit breaker operation.

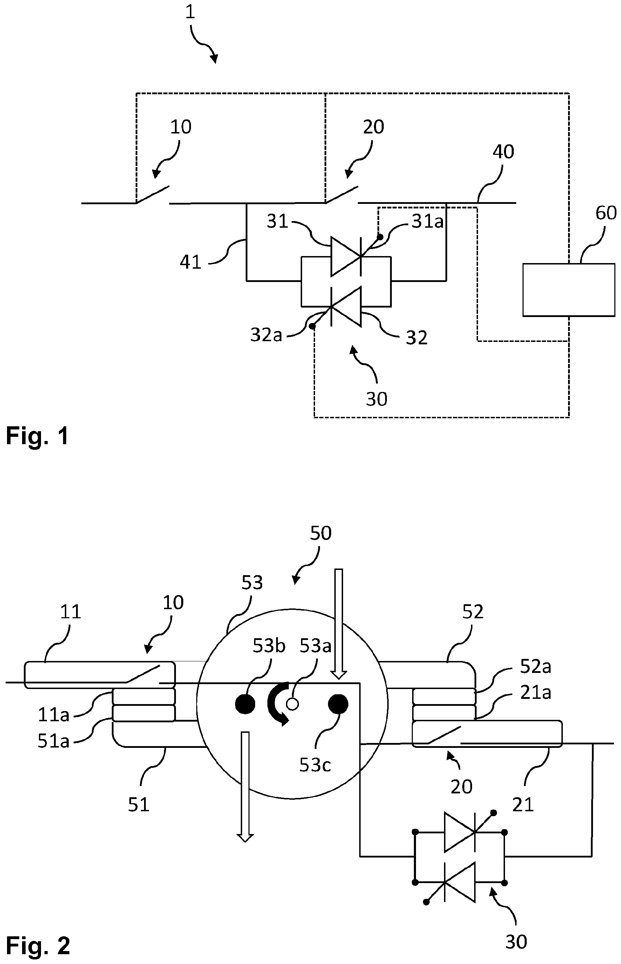

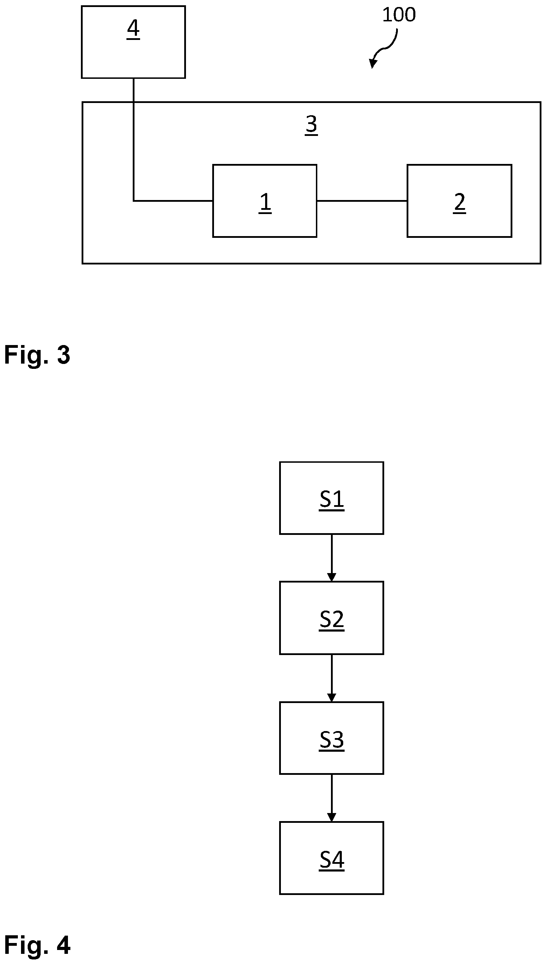

**Figure 1** shows a schematic view of a high-speed circuit breaker device 1 according to an exemplary embodiment of the present invention. The high-speed circuit breaker device 1 comprises two first circuit breakers 10, 20 connected in series along a primary power supply line 40. The primary power supply line 40 connects a DC power supply unit 4 (Fig. 3) with at least one consumer unit 2 (Fig. 3) as a load, wherein a DC current direction in the direction of the at least one consumer unit 2 with respect to the DC power supply unit 4 represents a downstream direction, while the other direction from the at least one consumer unit 2 to the DC power supply unit represents an upstream unit. Accordingly, the first circuit breaker 10 may be hereinafter referred to as upstream first circuit breaker 10 and the first circuit breaker 20 as downstream first circuit breaker 20. The two first circuit breakers 10, 20 are electromechanical circuit breakers as further described below with respect to Fig. 2.

The high-speed circuit breaker device 1 further comprises a second circuit breaker 30 connected in parallel to the downstream first circuit breaker 20 by a secondary power supply line 41. In other embodiments, the second circuit breaker 30 may also be connected in parallel to both of the first circuit breakers 10, 20. However, this may require further components for insulation. In the exemplary embodiment, the second circuit breaker 30 comprises two IGBTs 31, 32 connected in parallel to each other, wherein the IGBT 31 may allow a current flow in the direction downstream of the downstream first circuit breaker 20 and the IGBT 32 may allow a current flow in the direction upstream of the downstream first circuit breaker 20. Each gate 31a, 32a of the IGBTs 31, 32 is connected to a control device 60, wherein the control device 60 is connected to the downstream first circuit breaker 20 to receive an arc voltage generated by the downstream first circuit breaker 20 upon interrupting the primary power supply line 40 in the presence of voltage. Further, the control device is also connected to a switching mechanism 50 (Fig. 2) and configured to provide the switching mechanism 50 with a control signal to open the first circuit breakers 10, 20 to interrupt the primary power supply line 40. In other embodiments, a respective control signal may be provided by another control device or by an intrinsic effect.

**Figure 2** shows a schematic view of the high-speed circuit breaker device 1 according to Figure 1 further showing the switching mechanism 50 for two first circuit breakers 10, 20 according to an exemplary embodiment of the present invention. The switching mechanism 50 comprises an actuator 53 rotatably about a pivot 53a to rotate about a rotational axis extending in the drawing plane. The rotational movement of the actuator 53 is implemented to provide an opening action by a counterclockwise rotation in the showed view. An opening mechanism 53b is represented by a force application point with an opening force acting from the opening mechanism 53b in a downward direction with respect to the drawing view as indicated by the arrow at the opening mechanism 53b to rotate the actuator 53 counterclockwise, i.e. in an opening direction. A closing mechanism 53c opposed to the opening mechanism 53b with respect to the pivot 53a is represented by a force application point with a closing force acting in a downward direction with respect to the drawing view toward the closing mechanism 53c as indicated by the arrow at the closing mechanism 53c to rotate the actuator 53 clockwise, i.e. in a closing direction. The opening mechanism 53b may be a driven pull mechanism and the closing mechanism 53c may be a compression spring. However, in other embodiments, the actuator 53 may be driven by a drive, such as an electromotor, to rotate in the closing and/or opening direction. The switching mechanism 50 further comprises two moveable contacts 51, 52 extending radially outward from the actuator 53 with respect to the rotational axis or pivot 53a, respectively. The movable contacts 51, 52 are arranged such that the respective contact members 51a, 52a as main movable tips are in contact with respective contact members 11a, 21a as main fixed tips of respective fixed contacts 11, 21 comprised by the upstream first circuit breaker 10 and the downstream first circuit breaker 20, respectively. Accordingly, the first circuit breakers 10, 20 are configured as electromechanical circuit breakers with a rotatory switching mechanism as switching mechanism 50 to simultaneously and, here, synchronously actuate the two first circuit breakers 10, 20 to open or to close the contacts 11, 51; 21, 52.

**Figure 3** shows a schematic view of a railway vehicle 100 according to an exemplary embodiment of the present invention. The railway vehicle 100 comprises at least one railway vehicle unit 3 with at least one consumer unit 2 to be supplied with DC current from a power supply unit 4, such as a DC pantograph. The power supply unit 4 is connected to the at least one consumer unit 2 by the primary power supply line 40, wherein the high-speed circuit breaker 1 is disposed therebetween to allow the primary power supply line to be interrupted.

**Figure 4** shows a flow chart of a method for controlling a high-speed circuit breaker device and/or a power supply system according to an exemplary embodiment of the present invention. The method is explained with reference to the exemplary embodiment of the high-speed circuit breaker according to Figure 1.

In step 1, the control device 60 detects a trigger event or receives an external command to break the primary power supply line 40. In the exemplary embodiment, the control device comprises respective monitoring means such as a current sensor. In other embodiments, the control device 60 may receive a respective signal from an external monitoring device or at least one of the first circuit breakers 10, 20 is configured to react in response of an intrinsic effect. Specifically, in the exemplary embodiment providing two first circuit breakers 10, 20, the two first circuit breakers 10, 20 work simultaneously.

In step 2, upon detection of the trigger event or reception of an external command, the control device 60 controls the first circuit breakers 10, 20 to interrupt the primary power supply line 40. In the exemplary embodiment, the two first circuit breakers 10, 20 are synchronously opened by driving the rotating switching mechanism 50 in the opening direction. By opening the first circuit breakers 10, 20 in the presence of voltage, electric arcs are generated between the respective contacts 11, 51; 21, 52 or contact members 11a, 51a; 21a, 52a, respectively. The electric arcs provide an arc voltage over the respective first circuit breakers 10, 20.

In step 3, the arc voltage of the downstream first circuit breaker 20 is applied to the second circuit breaker 30 via the control device 60.

According to step 4, if the arc voltage reaches or exceeds an activation threshold of the second circuit breaker, here 100 Vdc, the second circuit breaker 30 is sufficiently powered to allow a current to flow over the IGBTs to short circuit the downstream first circuit breaker 20 via the secondary power supply line 41. However, as the method in the exemplary embodiment is intended to provide such short circuiting only in the event of the downstream first circuit breaker 20 being ineffective to effectively interrupt the current of the primary power supply line 40 in sufficiently short time indicative of a low current, the control device 60 first starts counting 100 ms as activation time when the arc voltage exceeds the activation threshold. If the arc voltage still reaches or exceeds the activation threshold after the activation time has elapsed, the control device 60 feeds the gates 31a, 32a of the two IGBTs 31, 32, commanding them to close. The IGBT 31, 32, which is in the correct direction of the current flow, starts the conductivity phase and thereby short circuits the downstream first circuit breaker 20. As a result, the electric arc of the downstream first circuit breaker 20 is extinguished due to a commutation phenomenon to the parallel branch. Further, the control device 60 is configured to command the two IGBTs 31, 32 to open to interrupt the current after a current flow time t2, e.g. 5ms. At this point, the electric arc in the upstream first circuit breaker 10 get broken as well.

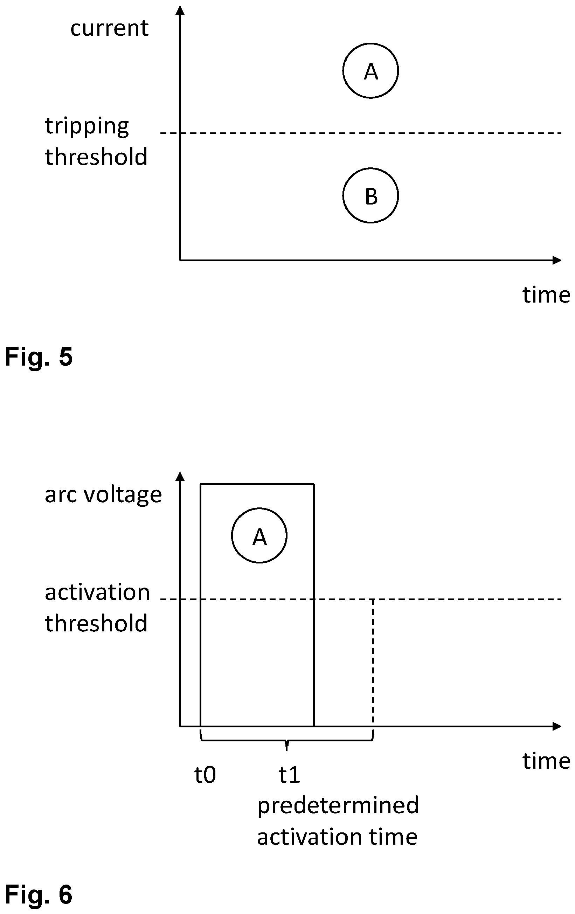

**Figure 5** shows a diagram to illustrate high current and low current conditions. In the exemplary embodiment, a high current condition may be above 50A, while a low current condition may be equal to or less than 50 A. In principle, the at least one first circuit breaker or the two first circuit breakers 10, 20 according to Figure 1, respectively, is/are configured to efficiently break currents from the tripping threshold to the short circuit current, referred to as high current operation indicated by the encircled A above the tripping threshold. In turn, the encircled B represents low current operation below the tripping threshold.

**Figure 6** shows a diagram to illustrate an arc voltage evolution under high current conditions with respect to a first circuit breaker operation. With reference to Figure 5, an opening of the at least one first circuit breaker such as the two first circuit breakers 10, 20 according to Figure 1 under high current operation at a time t0 may result in an arc voltage exceeding the predetermined activation threshold. However, since the two first circuit breakers 10, 20 effectively interrupt the primary power supply line 40, the arc voltage falls below the predetermined activation threshold in sufficient time, i.e. before the predetermined activation time t1 starting from the occurrence of the arc voltage exceeding the predetermined activation threshold has been elapsed. With the at least one second circuit breaker, e.g. the second circuit breaker 30 according to Figure 1, being controlled to close only after the predetermined activation time has been elapsed and the arc voltage is still equal to or more than the predetermined activation threshold, the interruption of the primary power supply line 40 is effectively broken by the at least one first circuit breaker, here, the two first circuit breakers 10, 20 according to Figure 1.

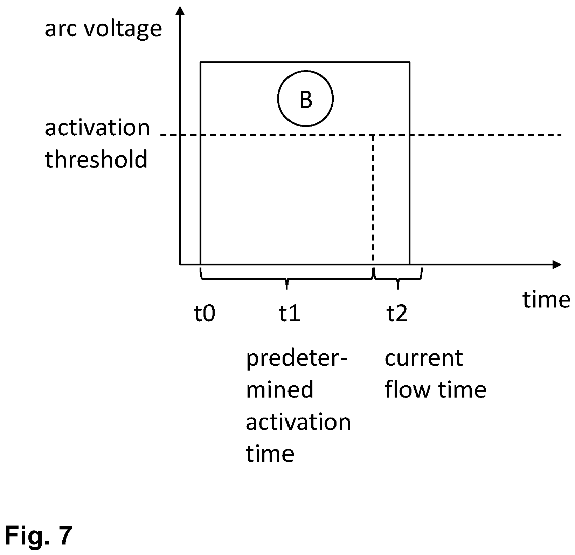

**Figure 7** shows a diagram to illustrate an arc voltage evolution under low current conditions with respect to a first circuit breaker and second circuit breaker operation. As previously described, the at least one first circuit breaker, here, the two first circuit breakers 10, 20 according to Figure 1, may not be able to efficiently break the current. Such inability becomes evident by the arc voltage still exceeding the activation threshold after the predetermined activation time t1 with reference to t0 has been elapsed. Specifically, the arc voltage still exceeding the activation threshold after the predetermined activation time t1 has been elapsed indicates a low current operation assuming that the at least one first circuit breaker is not efficiently working under low current. Accordingly, the at least one second circuit breaker, here, the second circuit breaker 30, is controlled to close to run the current over the secondary power supply line 41 after the predetermined activation time has been elapsed. Here, the at least second circuit breaker is controlled to be open no longer than the predetermined current flow time t2 sufficient to reduce the arc voltage and the current, respectively, to zero.

Accordingly, the high-speed circuit breaker device in a configuration, in which the second circuit breaker is provided with the arc voltage of the at least one first circuit breaker, the second circuit breaker can be controlled and/or powered with the arc voltage of the at least one first circuit breaker: This allows to provide an intrinsic control of high-speed circuit breaker device for both, high current and low current breaking. The invention has been described with respect to an exemplary embodiments. However, the invention is not limited to the exemplary embodiments. In particular, the at least one second circuit breaker may be as minimized as possible due to the low level of current that has to briefly supply and then break.

### LIST OF REFERENCE SIGNS

- 1: circuit breaker device
- 2: consumer unit
- 3: railway vehicle unit
- 4: power supply unit (DC)
- 10: first circuit breaker (electromechanical)
- 11: fixed contact
- 11a: contact member (main fixed tip)
- 20: first circuit breaker (electromechanical)
- 21: fixed contact
- 21a: contact member (main fixed tip)
- 30: second circuit breaker (static)
- 31: IGBT
- 31a: gate
- 32: IGBT
- 32a: gate
- 40: primary power supply line
- 41: secondary power supply line
- 50: switching mechanism
- 51: movable contact
- 51a: contact member (main movable tip)
- 52: movable contact
- 52a: contact member (main movable tip)
- 53: actuator
- 53a: pivot
- 53b: opening mechanism
- 53c: closing mechanism
- 60: control device
- 100: railway vehicle

## Claims

1. High-speed circuit breaker device (1) for interrupting an electrical circuit of a railway vehicle (100) or railway vehicle environment supplied by a DC current, comprising:
at least one first circuit breaker (10, 20) configured to interrupt a primary power supply line (40), wherein
the high-speed circuit breaker device (1) further comprises at least one secondary circuit breaker (30) connected in parallel to the at least one primary circuit breaker (10, 20) by a secondary power supply line (41), and wherein
the at least one secondary circuit breaker (30) is configured to interrupt the secondary power supply line (41) upon a voltage applied to the at least one second circuit breaker (30) below a predetermined activation threshold of the second circuit breaker (30) and to allow a current flow along the secondary power supply line (41) upon the voltage reaching or exceeding the predetermined activation threshold of the second circuit breaker (30).

2. High-speed circuit breaker device (1) according to claim 1, wherein the high-speed circuit breaker device (1) is configured to provide the voltage to be applied to the at least one second circuit breaker (30) upon interrupting the primary power supply line (40) under DC current by the at least one first circuit breaker (10, 20), when the DC current is below a predetermined tripping threshold of the at least one second circuit breaker (30), preferably below 100 A, more preferably below 50 A.

3. High-speed circuit breaker device (1) according to claim 2, wherein the tripping threshold corresponds to a DC current insufficient to lower the DC current within a predetermined period of time by the interrupting action of the at least one first circuit breaker (10, 20).

4. High-speed circuit breaker device (1) according to any one of the preceding claims, wherein the at least one first circuit breaker (10, 20) is connected to the at least one second circuit breaker (30) to provide the at least one second circuit breaker (30) with the voltage to be applied to the at least one second circuit breaker (30) upon interrupting the primary power supply line (40) under DC current.

5. High-speed circuit breaker device (1) according to any one of the preceding claims, wherein the high-speed circuit breaker device (1) further comprises a control device (60) configured to control the at least one second circuit breaker (30) to allow a current flow only after the activation threshold of the second circuit breaker (30) has been reached or exceeded over a predetermined activation time (t1), preferably at least 50 ms, more preferably at least 100 ms, and/or upon determination of the DC current upon interrupting by the at least one first circuit breaker (10, 20) falling below the tripping threshold.

6. High-speed circuit breaker device (1) according to any one of the preceding claims, wherein the control device (60) according to claim 5 or another control device comprised by the high-speed circuit breaker device is configured to control the at least one second circuit breaker (30) to interrupt the secondary power supply line (41) after a current flow via the at least one second circuit breaker (30) over a predetermined current flow time (t2), preferably no longer than 10 ms of current flow, more preferably, no longer than 5 ms of current flow.

7. High-speed circuit breaker device (1) according to any one of the preceding claims, wherein the at least one second circuit breaker (30) comprises at least one IGBT (31, 32), preferably two IGBTs (31,32), each of which is configured and arranged to allow a current flow in a different direction according to a DC current direction applied.

8. High-speed circuit breaker device (1) according to any one of the preceding claims, wherein the at least one first circuit breaker (10, 20) is an electromechanical circuit breaker, comprising at least one movable contact (51, 52) and at least one fixed contact (11, 21) and at least one actuator (53) configured to move at least one movable contact (51, 52) towards and way from the at least one fixed contact (11, 21).

9. High-speed circuit breaker device (1) according to any one of the preceding claims, wherein the high-speed circuit breaker device (1) comprises at least two first circuit breakers (10, 20) connected in series along the primary power supply line (40).

10. High-speed circuit breaker device (1) according to claim 9, wherein the high-speed circuit breaker device (1) comprises a switching mechanism (50) configured to actuate the at least two first circuit breakers (10, 20) to interrupt the primary power supply line (40) simultaneously, preferably synchronously.

11. High-speed circuit breaker device (1) according to claim 10, wherein the switching mechanism (50) is a rotating switching mechanism (50) to actuate the at least two first circuit breakers (10, 20) as electromechanical circuit breakers according to claim 8 by comprising the respective movable contacts (51, 52), each of which extending radially outward from a rotatable actuator (53) with respect to the rotational axis of the rotatable actuator (53).

12. Power supply system for a railway vehicle (100) or railway vehicle environment, comprising:
at least one DC power supply unit (4),
at least one consumer unit (2) operatively connected to the at least one DC power supply unit (4) by a primary power supply line (40), and
at least one high-speed circuit breaker device (1) according to any one of the claims 1 to 11 disposed on the primary power supply line (40) between the at least one DC power supply unit (4) and the at least one consumer unit (2).

13. Method for controlling a high-speed circuit breaker device according to any one of the claims 1 to 11 and/or a power supply system according to claim 12, comprising the steps of:
detecting a trigger event or receiving an external command to interrupt the primary power supply line (40) (S1),
interrupting the primary power supply line (40) by the at least one first circuit breaker (10, 20) (S2),
applying a voltage to the at least one second circuit breaker (30) (S3), and
allowing a current flow over the secondary power supply line (41) by the second circuit breaker (30) upon the applied voltage reaching or exceeding the predetermined activation threshold of the second circuit breaker (30) (S4).

14. Method according to claim 13, wherein the voltage is applied to the at least one second circuit breaker upon the voltage reaching or exceeding the predetermined activation threshold of the second circuit breaker (30) over a predetermined activation time (t1), preferably at least 50 ms, more preferably at least 100 ms, and/or upon determination of the DC current upon interrupting by the at least one first circuit breaker (10, 20) falling below the tripping threshold, or
wherein allowing a current flow over the secondary power supply line (41) by the second circuit breaker (30) upon the applied voltage reaching or exceeding the predetermined activation threshold of the second circuit breaker (30) is performed upon the voltage reaching or exceeding the predetermined activation threshold of the second circuit breaker (30) lasts for at least a predetermined activation time (t1), preferably at least 50 ms, more preferably at least 100 ms, and/or upon determination of the DC current upon interrupting by the at least one first circuit breaker (10, 20) falling below the tripping threshold.

15. Railway vehicle comprising a high-speed circuit breaker device (1) according to any one of the claims 1 to 11 and/or a power supply system according to claim 12 and/or being configured to execute the method according to claim 13 or 14.
